# DEMANDE DE BREVET EUROPEEN

(11) **EP 1 623 924 A1**
(43) Date de publication de la demande: **08.02.2006**
(21) Numéro de dépôt: 05364021.5
(22) Date de dépôt: 12.07.2005
(51) Int. Cl.: B64F 1/22

(54) **Chariot de manutention automoteur à conducteur accompagnant pour avion de tourisme**

(30) Priorité: 06.08.2004 FR 0408705
(71) Demandeur: Barré, Daniel, 35360 Montauban de Bretagne (FR)
(72) Inventeur: Barré, Daniel, 35360 Montauban de Bretagne (FR)

(57) **Abrégé**

L'invention concerne un dispositif permettant de décoller sans effort la roue avant d'un avion de tourisme du sol et de le diriger à l'aide d'un chariot motorisé alimenté par batteries. Le chariot est constitué d'un châssis(1), un timon de conduite(5), un bras(7) réceptionnant la roue de l'avion(31). Par guidage latéral(29 et 30), le bras reçoit la roue contre la butée fixe(27). Une butée amovible(25) se place manuellement derrière la roue selon son diamètre, la bloquant pour le basculement du bras et le maniement du chariot. Après déblocage du timon libérant le bras, une pression manuelle sur le timon décolle la roue.

L'invention est notamment destinée au déplacement d'avion de tourisme .

## Description

La présente invention concerne un procédé incorporé dans un chariot pour tracter manuellement des avions de tourisme. Le déplacement d'un avion de tourisme est généralement exécuté par l'homme en le tirant ou en le poussant à la force des bras hors des hangars vers les parkings. Certains avions pouvant fréquemment dépasser les 800 kg, ces manipulations comportent des risques tels que : mal de dos, fatigue physique, glissement sur le sol, risque de tomber, etc....

Ce chariot de manutention permet de pallier à ces désagréments, il comporte en effet un ensemble timon/bras permettant de décoller la roue de l'avion du sol et de le diriger sans effort à l'aide du chariot manuel électrique.

Ce bras permet de réceptionner par guidage latéral la roue avant d'un avion contre une butée fixe et de l'immobiliser à l'aide d'une butée arrière amovible manuellement, montée sur crémaillère.

L'ensemble du bras est monté sur 2 paliers solidaires du châssis. Avec une pression verticale descendante sur le timon boulonné au bras, ce bras bascule et permet de lever la roue de l'avion sans effort pour déplacer celui-ci à l'aide d'une motorisation intégrée au chariot.

Les dessins annexés illustrent l'invention :

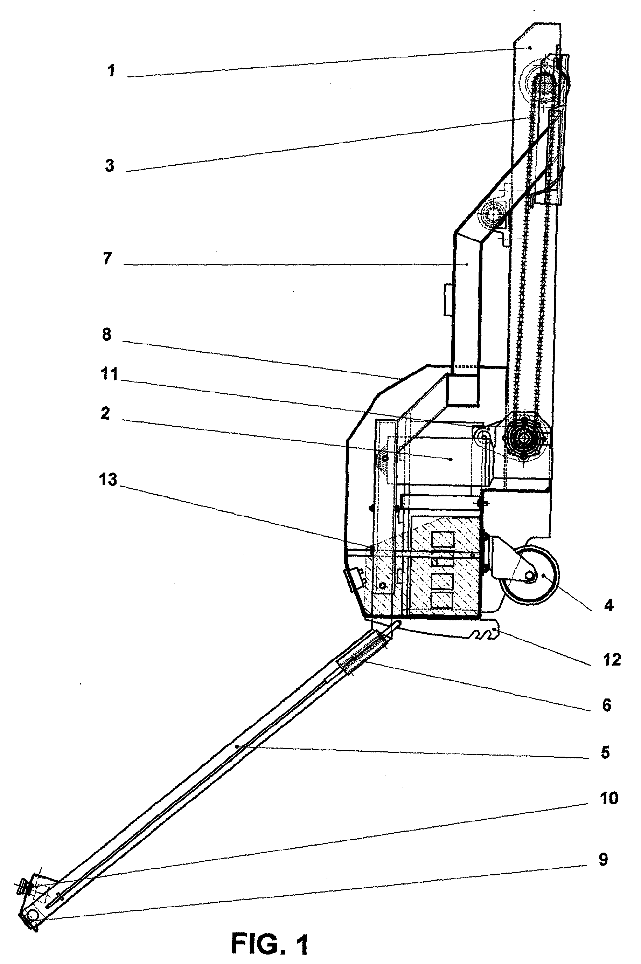

La figure 1 est une vue d'ensemble du chariot.

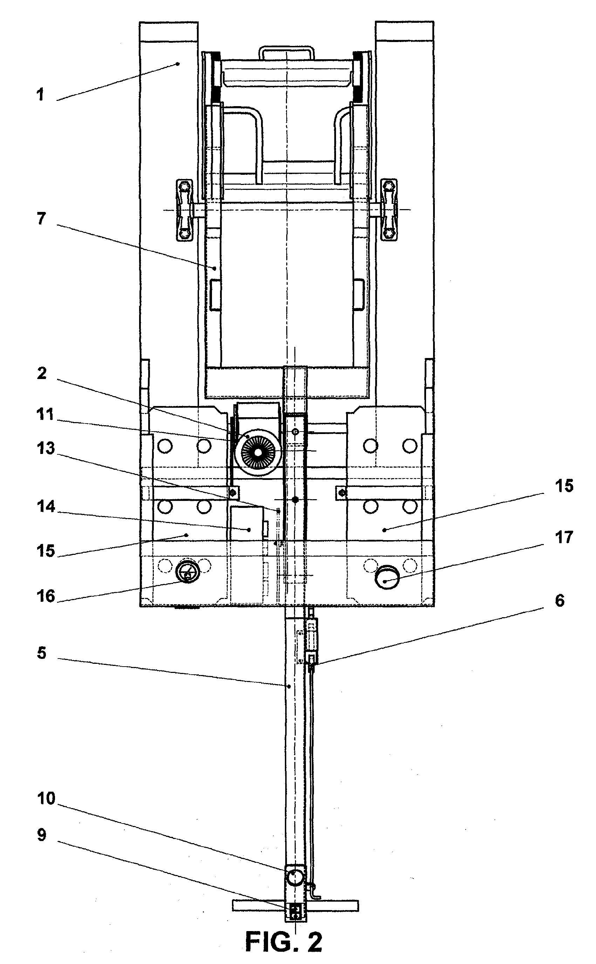

La figure 2 est une vue du dessus du chariot dans son ensemble.

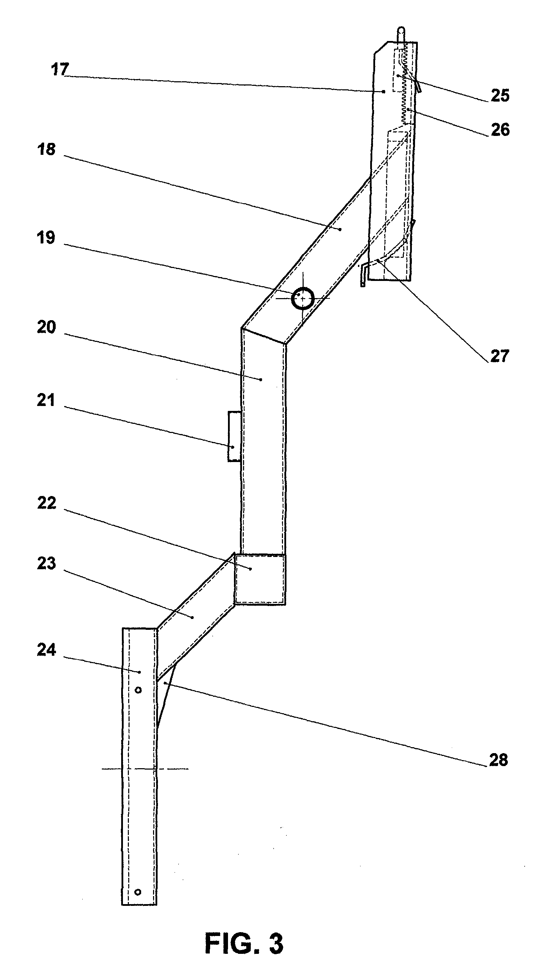

La figure 3 représente la composition du bras, vue de gauche.

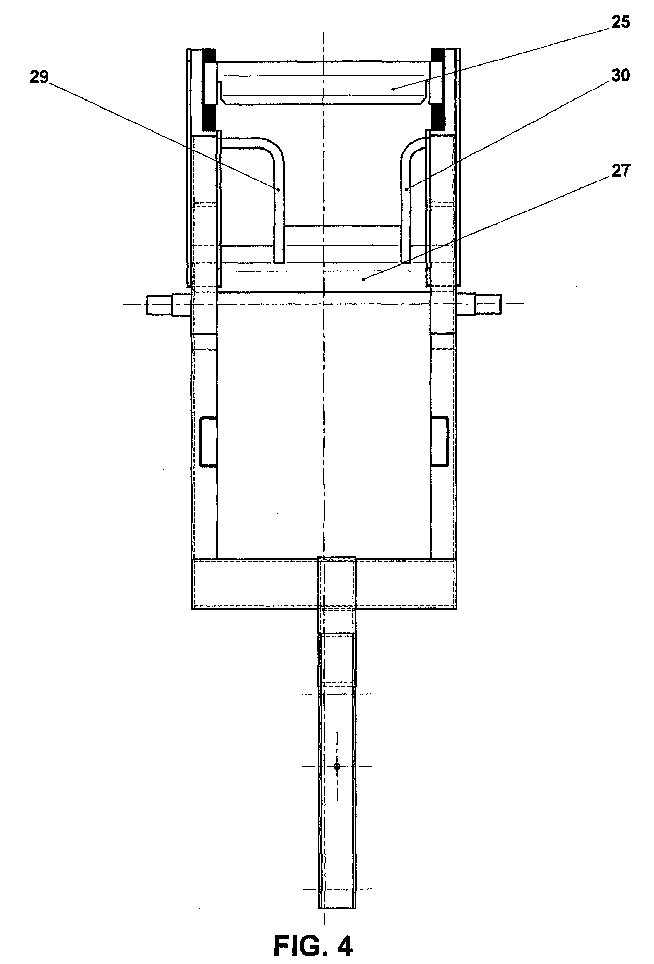

La figure 4 représente la composition du bras, vue de dessus.

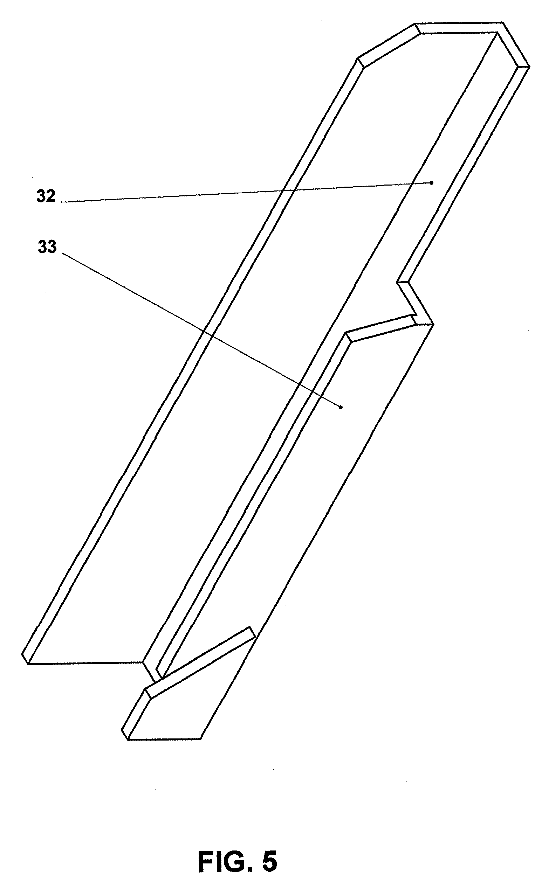

La figure 5 est une perspective illustrant les découpes des U de base du bras.
La figure 6 montre une perspective isométrique de la butée fixe soudée sur les U
La figure 7 représente une perspective de la butée amovible à crémaillère.

En référence à ces dessins, le chariot est constitué de :
Un châssis (1) comprenant deux fourches en tôle pliée épaisseur 4 mm soudées à une extrémité sur une embase servant de support pour les batteries (15) et la partie électrique (14) en tôle pliée épaisseur 4 mm et recevant les joues d'une épaisseur de 2 mm. L'ensemble est mécano-soudé
Un moto-réducteur (2) fixé sur l'embase du châssis par son bras de couple (11) fonctionnant avec un moteur à courant continu 24 volts, 3000 tours par minutes avec un réducteur de rapport de réduction de 1/40.
1 système de transmission par chaînes doubles (3) au pas de 9,52 mm entraînant 2 roues diamètre 200 mm avec un bandage en caoutchouc souple pour une meilleure adhérence.

Sous le châssis du chariot, deux roulettes folles (4) diamètre 200 mm pour stabilisation de l'ensemble

Un timon de conduite de l'appareil (5), avec tirette de verrouillage (6) pour libérer la rotation du bras, et régler la hauteur du dispositif de prise sous la roue avant de l'avion, l'ensemble pivotant sur paliers horizontaux fixés sur les longerons du châssis. La tirette de verrouillage est immobilisée dans les encoches du plat usiné (12) permettant le verrouillage du bras dans la position souhaitée.

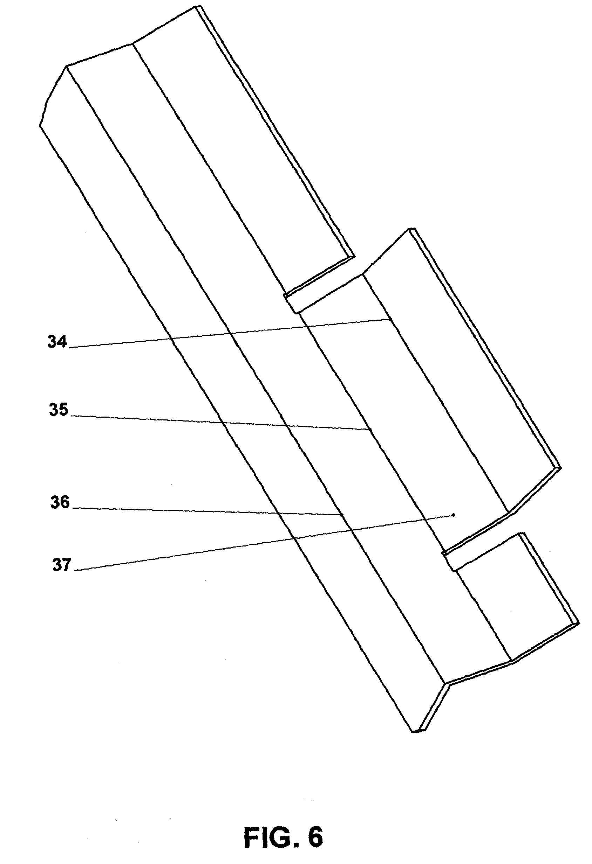

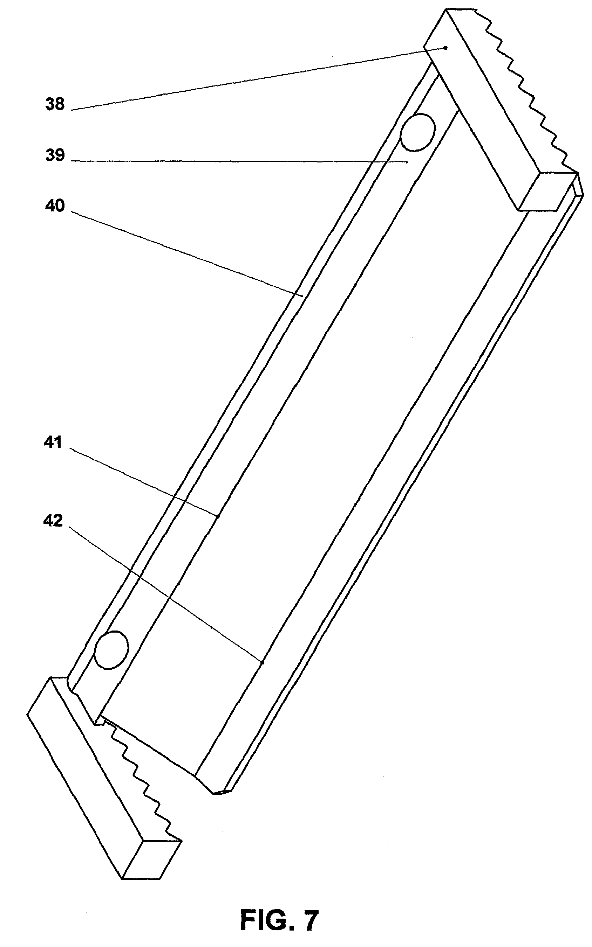

Un bras (7) constitué d'un ensemble de :
2 U symétriques (17) en tôle pliée épaisseur 6 mm de dimensions 35x41x60 mm, cotes intérieures, longueur 400 mm. Chaque U possède aux extrémités une découpe sur les faces de hauteur 35 mm (33) et de largeur 41 mm (32). Une première découpe est réalisée sur l'aile de 35 mm sur une longueur de 170 mm puis une encoche est réalisée sur la face (32) de 28,5 mm par 150 mm. Cette découpe permet d'incorporer une crémaillère du commerce (26) soudée de longueur 150 mm au pas de 5 mm section 20x20(Ces crémaillères servent à positionner et à régler la butée amovible (25) détaillée sur la figure 7. Sur l'aile de coté 35 mm (33) du U, une deuxième découpe, à l'autre extrémité, avec un angle à 45°, profondeur de la découpe 49,5 mm et de largeur 6 mm se situe à 28 mm à l'arrière du U. Cette découpe permet de positionner et souder la butée fixe (27)détaillée sur la figure 6.

Dans le fond des U (17) viennent se réceptionner sur le champ un fer UAC (18) de dimensions 40x70x40, longueur 414,4 mm totale. Une extrémité des fers UAC (18) est réalisée avec un angle de coupe à 37.4°et vient se positionner à l'intérieur de chaque U (17) à 160 mm du bord du U (17) coté crémaillère. L'autre extrémité des fers UAC (18)est réalisé avec un angle de coupe inversé à 70°. Ce fer UAC (18) reçoit un axe de rotation (19) de diamètre 35 et 30 mm, longueur totale 70 mm. Cet axe est positionné à 61,2 mm de l'extrémité de l'angle à 70° des fers UAC (18) et à 46,8 mm du dessus et soudé sur la face de 70 mm. Ces axes montés sur paliers permettent le basculement du bras. Sur chaque extrémité des fers UAC (18) vient se souder un autre fer UAC (20) de longueur totale 360 mm avec un angle à 70° à une extrémité et un angle à 90° à l'autre. Les angles à 70° des fers UAC (18 et 20) sont soudés, ce qui forment un angle global à 140°.

Sur le champ supérieur des fers UAC (20) sont chenillés des U (21) d'épaisseur 3 mm de dimensions 25x75x25 (cotes intérieures) hauteur 20 mm à une distance de 110 mm de l'angle à 90° et à 12 mm de l'extérieur des fers UAC (20). Ces U (21) permettent de recevoir la butée amovible (25) lors de sa non-utilisation. Sur l'angle à 90° des fers UAC (20) est soudé, horizontalement et perpendiculairement à ces fers UAC (20), un tube carré (22) de dimensions 80x80x3 et de longueur 418 mm. Ce tube est bouché à chaque extrémité par une platine.
Sur le dessus du tube (22) est soudé un tube de dimensions 60x60x4 (23) de longueur totale 242,6 mm avec 2 angles de coupe à 52,9° parallèles. Ce tube (23) est soudé sur le dessus du tube (22) avec un décalage de 20 mm par rapport au centre sur la longueur du tube (22) et parallèlement aux fers UAC (18 et 20). Il est positionné sur une de ses deux coupes à 52,9° dans le sens opposé aux fers UAC. Sur l'autre coupe à 52,9° du tube (23) est fixé un U (24) en tôle pliée d'épaisseur 4 mm, de largeur 51 mm (dimensions intérieures) avec une aile de 50 mm (dimensions intérieures) et une aile de 40 mm (dimensions intérieures) et de longueur 420 mm avec cinq trous de diamètre 8,2 mm pour fixation du timon(bride de timon). Un gousset (28) est soudé en renfort sous le U (24) et le tube (23).

Une butée fixe soudée (27) de longueur 415 mm rendant solidaire les deux U (17) sert à mettre en appui la roue de l'avion. La réalisation de cette butée, détaillée sur la figure 6, est composée d'une tôle épaisseur 5 mm pliée à quatre facettes afin de former un arrondi. Le premier pli (34) est réalisé 35 mm du bord avec un angle à 157°, le deuxième pli (35) se situe 40 mm plus loin angle à 157°et le dernier pli (36) se situe 30 mm plus loin angle à 100°. Ce dernier pli se fait à l'inverse des 2 autres.

Sur la deuxième facette (37) une découpe de 40 mm de hauteur sur 15 mm de largeur.

2 guidages latéraux (29 et 30) en plat de section 30x15 cintrée sur le champ au rayon de 40 mm extérieur, les dimensions de pliage intérieur sont de 185x85 mm (29) et de 185x25 mm (30).Ces deux plats sont soudés sur les U (17) et sur la butée fixe (27). Ils servent à maintenir la roue de l'avion dans un passage de 185 mm pour que celle-ci ne pivote pas, ne se déporte pas sur un coté. Ils protègent ainsi la partie mécanique de la roue avant de l'avion et le carénage.
L'ensemble de tous les profilés mentionnés dans le détail du bras sont assemblés par soudure.

Une butée amovible à crémaillère, détaillée sur la figure 7, servant à bloquer différents diamètres et largeurs de roue d'avion est constituée de :
2 crémaillères du commerce (38) de longueur 68 mm au pas de 5 mm section 20x20. Sur ces crémaillères est soudée, sur un coté de la longueur à 8 mm du dessus de la crémaillère (position des dents de la crémaillère vers le bas), la facette de longueur 18 mm (39) de la tôle pliée.
Une tôle épaisseur 4 mm pliée avec 3 plis, le premier pli se situant à 15 mm du bord avec un angle à 160°(42) et le deuxième pli (41)à 40 mm du premier avec un angle à 139°et le troisième plis à 18 mm du plis précédent avec un angle à 160°. Les deux derniers plis sont inversés au premier

Une partie électrique (14) comprenant :
une protection fusible
un contacteur inverseur 24V
un buzzer pour signalisation de marche
matériels divers de raccordement
deux batteries 135 ampères, de 12 volts chacune (15)
un témoin de charge (16)
un coupe circuit général (17)

un écran de protection(13)en plexiglas positionné devant les composants électriques.
un carter(8) en tôle pliée à quatre facettes d'une épaisseur de 2 mm avec deux passages pour le bras venant protéger les parties électriques et les batteries. Le carter est fixé par des vis sur le châssis.

Sur le timon(5), un boîtier de commande(9) regroupant les commandes de avance/recul de l'avion, ainsi qu'un coup de poing d'arrêt(10).

## Revendications

1. Dispositif incorporé dans un chariot de manutention automoteur à conducteur accompagnant pour avion de tourisme. Ce chariot, alimenté par deux batteries, est **caractérisé par** un bras pivotant (7)à l'intérieur du chariot. Ce bras comporte une bride de timon(24) en forme de U maintenu à la fourche (18 et 20) par deux tubes carrés(22 et 23). Cette fourche est constituée de quatre fers UAC sur lesquels sont soudés un axe de rotation(19) montés sur paliers fixés sur le châssis (1). En continuité de cette fourche (18 et 20), sont soudés deux U parallèles (17) servant de support pour souder la butée fixe(27), les guidages latéraux(29 et 30) et les crémaillères(26). Ces U (17) se terminent par l'apposition sur les deux crémaillères(26) d'une butée amovible à crémaillère (25) pour l'immobilisation de la roue de l'avion. Le basculement du bras se fait manuellement à l'aide du timon après déverrouillage de la tirette.

2. Dispositif selon la revendication 1 **caractérisé en ce qu'**un U (24) ,percé de cinq trous pour brider le timon, est soudé, sur sa largeur à une extrémité, sur la coupe de 52,9° du tube carré (23). Ce tube carré(23), avec une coupe parallèle à chaque extrémité de 52,9°, est soudé perpendiculairement sur le dessus du tube carré(22), avec un décalage par rapport au centre, sur la longueur du tube carré(22). Ce tube(23) est soudé parallèlement aux fers UAC(20). Un gousset (28) servant de renfort est soudé sous le U (24) et le tube (23).

3. Dispositif selon la revendication 1 **caractérisé en ce que** deux U(20) comportant 1 coupe à une extrémité de 90° et à l'autre extrémité une coupe à 70° soudée sur deux fers UAC(18) formant un angle à 140°. Deux autres U (21) réalisés en fer plat sont soudés sur champ sur les U (20) servant de rangement pour la butée amovible (25).

4. Dispositif selon la revendication 1 **caractérisé en ce que** deux fers UAC(18) sur le champ avec 1 angle de 70° à une extrémité et une autre coupe inversée de 37,4° à l'autre extrémité viennent se souder dans les U (17). Deux axes de rotation (19) sont soudés sur les faces extérieures des fers UAC (18). Dans le prolongement de la fourche du bras sont soudés deux U symétriques(17) avec deux découpes sur chaque U pour souder la butée fixe(27),.les guidages latéraux (29 et 30), les deux crémaillères (26) recevant la butée amovible à crémaillère(25)

5. Dispositif selon la revendication 1 et 4 **caractérisé en ce qu'**une butée fixe (27) en tôle pliée à quatre facettes avec deux découpes sur la deuxième facette permet de fixer les guidages latéraux (29 et 30).

6. Dispositif selon la revendication 1 et 4 **caractérisé en ce que** deux guidages latéraux (29 et 30) en plat cintré sur champ sont soudés sur le coté des U (17) et sur le devant de la butée fixe (27).

7. Dispositif selon la revendication 1 et 4 **caractérisé en ce qu'**une butée amovible (25) constituée de deux crémaillères (38) soudées contre une tôle à trois plis dont les deux derniers sont inversés au premier(40, 41 et 42).
